# EUROPEAN PATENT SPECIFICATION

(11) **EP 4 569 238 B1**
(45) Date of publication and mention of the grant of the patent: **29.07.2026**
(21) Application number: 23772717.7
(22) Date of filing: 23.08.2023
(51) Int. Cl.: F16B 13/14

(54) **SYSTEM FOR CENTERING RODS IN GLUED-IN-ROD STRUCTURES**
SYSTEM ZUM ZENTRIEREN VON STÄBEN IN GEKLEBTEN STANGENSTRUKTUREN
SYSTÈME DE CENTRAGE DE TIGES DANS DES STRUCTURES À TIGE COLLÉE

(30) Priority: 26.08.2022 US 202263401315 P; 22.08.2023 US 202318453840
(43) Date of publication of application: 18.06.2025
(73) Proprietor: Simpson Strong-Tie Company Inc, Pleasanton, California 94588 (US)
(72) Inventor: HASANI, Hamed, Pleasanton, California 94588 (US)
(74) Representative: Fuchs Patentanwälte Partnerschaft mbB
(86) International application number: PCT/US2023/072697
(87) International publication number: WO 2024/044614

(56) References cited:
- EP-B1- 2 893 139
- CN-U- 206 801 085
- DE-A1- 3 014 078
- GB-A- 1 461 967
- US-A1- 2016 194 869

## Description

This application claims priority to U.S. Patent Application No. 18/453,840, entitled "SYSTEM FOR CENTERING RODS IN GLUED-IN-ROD STRUCTURES", filed August 22, 2023, which claims priority to U.S. Provisional Patent Application No. 63/401,315 filed on August 26, 2022 entitled "SYSTEM FOR CENTERING RODS IN GLUED-IN-ROD STRUCTURES",

### BACKGROUND

Glued-In-Rod (GIR) systems are known where a rod is glued into a hole that is drilled in wood. This wood may be solid sawn or composed of a structural composite lumber (SCL), such as for example cross laminated timber (CLT). In GIR systems, when glue is injected into the drilled hole, the glue fills voids around the hole and leaves a layer of glue on the walls of the hole which bind the rod in the finished GIR system.

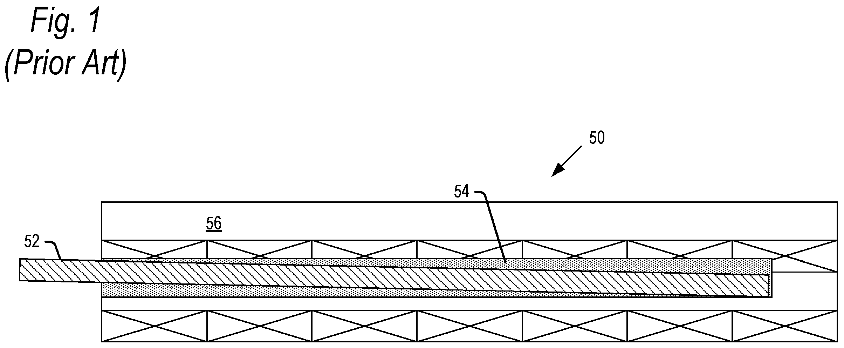

Fig. 1 shows a view of a conventional GIR system 50 including a rod 52 glued into a hole 54 in a wood structure 56. The rod 52 has a smaller diameter than the hole 54 so that glue can fill the space between the rod 52 and hole 54. However, this space allows the rod to move off-center within the hole 54, an example of which is shown in Fig. 1. An off-center position of the rod can leave some areas between the rod and wall of the hole having little or no glue therebetween. This can significantly lessen the strength with which the glued-in-rod is held within the hole. A collar is known from DE 30 14 078 A1.

### BRIEF DESCRIPTION OF THE DRAWINGS

Figure 1 is a front cross-sectional view of conventional GIR system with a rod off-center within the hole.
Figure 2 is a front cross-sectional view of a section of lumber such as cross laminated timber including a glued in rod having a collar to center the rod according to embodiments of the present technology.
Figures 3 and 4 are different perspective views of an end collar for centering a rod according to embodiments of the present technology.
Figure 5 is a top view of an end collar according to embodiments of the present technology.
Figure 6 is a cross-sectional view through line 6-6 in Fig. 5.
Figure 7 is a perspective view of an intermediate collar for centering a rod according to embodiments of the present technology.
Figure 8 is a top view of an intermediate collar for centering a rod according to embodiments of the present technology.
Figure 9 is a cross-sectional view through line 9-9 in Fig. 8.
Figure 10 is a top cross-sectional view of a collar within a hole centering a glued-in-rod according to embodiments of the present technology.
Figure 11 is a cross-sectional side view showing an alternative embodiment of the present technology.
Figure 12 is a side view of a collar showing an alternative configuration of splines according to embodiments of the present technology.

### DETAILED DESCRIPTION

A collar according to claim 1 is provided. The present technology, roughly described, relates to systems and methods for centering a rod within a drilled hole in glued-in-rod (GIR) structures. These systems and methods comprise a collar which fits around a rod when the rod is inserted into the drilled hole. A first type of collar, referred to herein as an end collar, fits over an end of the rod that gets inserted first into the drilled hole. The end collar may include threads matching threads of the rod, and may screw onto the end of the rod. Alternatively, the end collar may snap onto the end of the rod. A second type of collar, referred to herein as an intermediate collar, is configured to fit between the first and second ends of the rod. The intermediate collar may have threads matching threads of the rod to screw onto the rod to a desired position along the rod. An end collar and/or one or more intermediate collars may be used to center a rod within the drilled hole. The end and intermediate collars may include splines or other features extending from a base of the collar. The features contact walls of the drilled hole to center the rod in the hole, while at the same time allowing fluid such as glue to pass around the collar as the collar and rod are inserted into the hole.

It is understood that the present invention may be embodied in many different forms and should not be construed as being limited to the embodiments set forth herein. Rather, these embodiments are provided so that this disclosure will be thorough and complete and will fully convey the invention to those skilled in the art. Indeed, the invention is intended to cover alternatives, modifications and equivalents of these embodiments, which are included within the scope of the invention as defined by the appended claims. Furthermore, in the following detailed description of the present invention, numerous specific details are set forth in order to provide a thorough understanding of the present invention. However, it will be clear to those of ordinary skill in the art that the present invention may be practiced without such specific details.

The terms "top" and "bottom," "upper" and "lower" and "vertical" and "horizontal" as may be used herein are by way of example and illustrative purposes only, and are not meant to limit the description of the invention inasmuch as the referenced item can be exchanged in position and orientation. Also, as used herein, the terms "substantially" and/or "about" mean that the specified dimension or parameter may be varied within an acceptable manufacturing tolerance for a given application. In one embodiment, the acceptable manufacturing tolerance is ± 2.5%. To calculate inches to centimeters, multiply the number of inches by 2.54, as one inch is equivalent to 2.54 centimeters.

For purposes of this disclosure, a connection may be a direct connection or an indirect connection (*e.g*., via one or more other parts). In some cases, when a first element is referred to as being connected, affixed, mounted or coupled to a second element, the first and second elements may be directly connected, affixed, mounted or coupled to each other or indirectly connected, affixed, mounted or coupled to each other. When a first element is referred to as being directly connected, affixed, mounted or coupled to a second element, then there are no intervening elements between the first and second elements (other than possibly an adhesive or melted metal used to connect, affix, mount or couple the first and second elements).

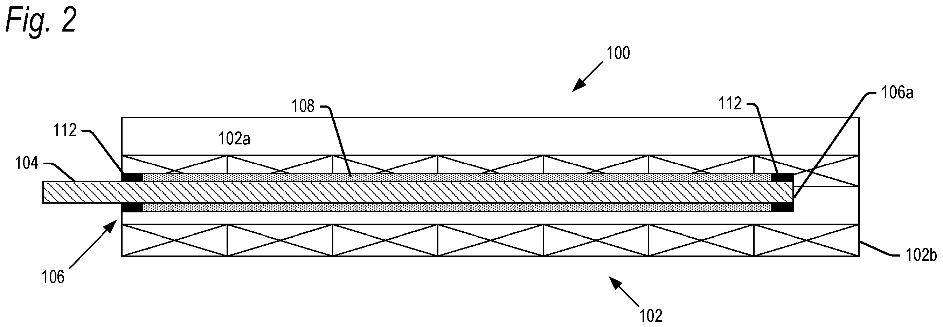

Referring initially to Fig. 2, there is shown a front cross-sectional view of a GIR structure 100 comprised of wood 102 in which a rod 104 has been glued into drilled hole 106 using a glue, or sealant, 108. In embodiments that follow, the wood shown is cross laminated timber (CLT). However, it is understood that the embodiments of the centering collar may be used with any type of wood or lumber. In the illustrated embodiments, the wood 102 may be CLT, including layers 102a of planks affixed together and extending in a first direction (left to right in Fig. 2), and layers 102b of planks affixed together and extending in a second direction (into the page of Fig. 2). There may be multiple layers 102a and 102b interspersed with each other. The number of layers, the directionality of each layer and the number of planks in each layer, are shown by way of example only and each may vary in further embodiments. There may also be more than one rod 104 in further embodiments.

Fig. 2 further shows a rod 104 that has been inserted into a drilled hole 106 to form a GIR structure 100. In one embodiment, the diameter of the drilled hole 106 may be 1-1/4 inch and the diameter of the rod 104 may be 1 inch. These dimensions are by way of example only and each may vary, proportionately and disproportionately to each other, in further embodiments.

Prior to insertion of the rod 104, the hole may be prepared with a glue or sealant lining the hole 106 and filling any voids in the wood 102 that are open to the hole 106. Although not critical to the present technology, one system for lining hole 106 with glue is disclosed in U.S. Patent Application Serial No. 17/711,466, entitled, "System for Filling Voids in Glued-In-Rod Structures". However, in general, sealant 108 may be any of various viscous fluids or pastes such as for example CI-GV adhesive from Simpson-Strong-Tie, headquartered in Pleasanton, CA. The sealant 108 may be supplied to the base 106a of hole 106 for example by being injected through a tube (not shown) which extends from outside the hole 106 to the base 106a of hole 106. The amount of sealant 108 supplied to hole 106 depends on the depth and diameter of the hole 106. In embodiments, the amount of sealant 108 used is sufficient to seal any voids open to the hole 106 and to leave a thin layer of sealant along the entire cylindrical wall of hole 106.

As noted in the Background section, when inserting a rod into a drilled hole, it may be desirable to include structure ensuring that the rod is centered within the drilled hole, thus ensuring a uniform layer of adhesive all around the rod within the drilled hole. Moreover, it may be useful to center the rod due to precision of construction. For example, a group of rods 104 is installed into the wood member 102 and after that they need to be inserted in other holes. In that case, imperfections, such as small angle of rods, may lead to impossibility of installation. Fig. 2 further shows a pair of collars 112 affixed at different positions along the length of rod 104 to ensure the rod 104 is centered within the drilled hole 106 in accordance with aspects of the present technology. A first collar 112, also referred to herein as end collar 112a, fits over an end of rod 104 (adjacent the base 106a). A second collar 112, also referred to herein as intermediate collar 112b, fits along a length of the rod 104. While Fig. 2 shows a pair of collars 112, there may be a single collar 112a at the end of rod 104, a single collar 112b along the length of rod 104, or more than two collars 112 at the end of rod 104 and/or along the length of rod 104 in further embodiments.

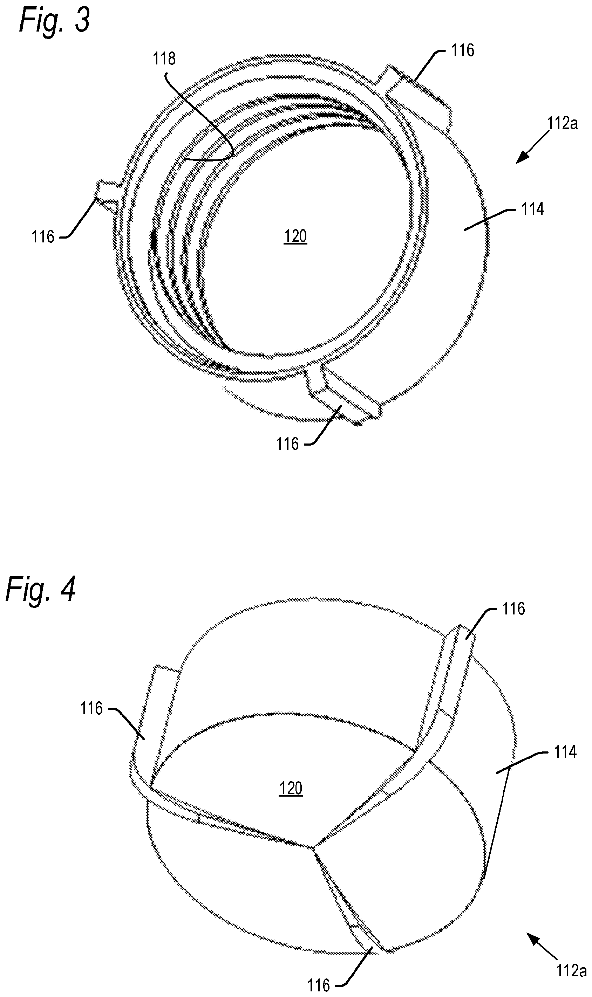

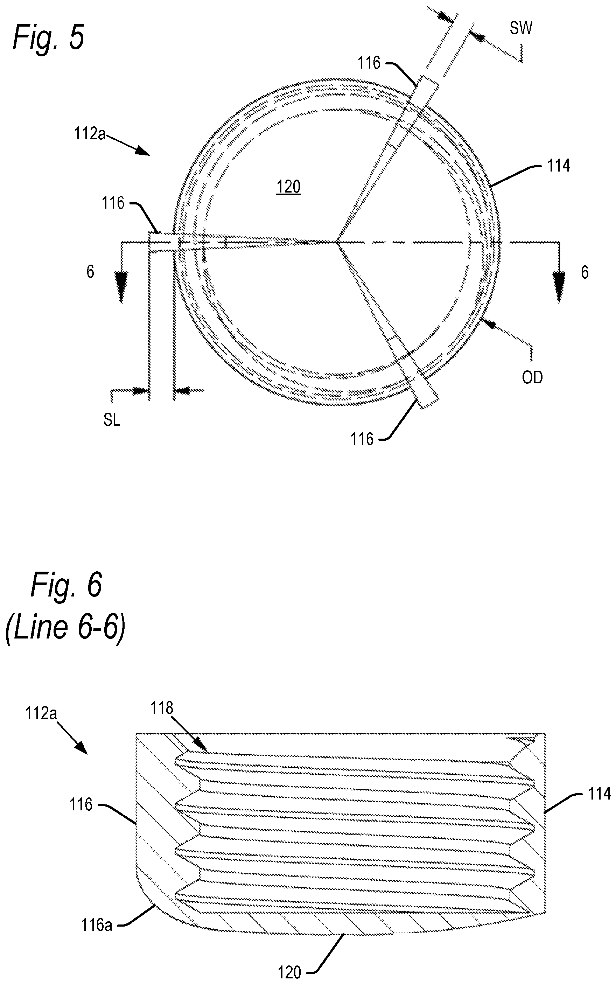

Figs. 3 and 4 are different perspective views of the end collar 112a configured to fit over the end of rod 104 so as to be positioned at base 106a when the rod 104 is inserted into hole 106. Fig. 5 is a top view of the end collar 112a, and Fig. 6 is a cross-sectional view of the end collar 112a through line 6-6 in Fig. 5. End collar 112a includes an annular base 114 and splines 116 extending radially outward from the annular base 114.

The annular base 114 includes an inner diameter that fits snugly around the rod 104. In one embodiment, rod 104 may have threads. In such embodiments, the inner diameter of the annular base 114 may be formed with threads 118 matching size and pitch to the rod threads so that the end collar 112a screws on to the end of rod 104 to affix the end collar 112a to the rod 104. The end collar 112a may have an end cap 120 which limits the travel of end collar 112a onto the rod 104. In one embodiment, the annular base 114 may have a length (along its axis of rotation) of ½ inch, though the annular base 114 may be longer or shorter than this in further embodiments. The end collar 112a would be affixed to rod 104 prior to inserting the rod 104 into hole 106.

The annular base 114 may have an outer diameter that is smaller than a diameter of the hole 106. In one embodiment, this outer diameter (OD, Fig. 5) may be 1.063 inches. However, it is understood that this outer diameter may be larger or smaller than that in further embodiments with the requirement that the OD of the annular base 114 be smaller than the diameter of hole 106. As explained below, this allows the sealant to flow around the end collar 112a as the end collar 112a and rod 104 are inserted into the hole 106 through the sealant 108.

In order to keep the rod 104 centered in hole 106 while still allowing insertion of the rod and end collar 112a, the end collar 112a includes splines 116 positioned at points around the outer periphery of the end collar 112a, extending radially outward from the annular base 114. Figs. 3-6 show three splines 116, spread evenly around the periphery of the annular base 114, as three splines are sufficient to fix the end collar 112a and rod in a centered position in a plane perpendicular to the central axis of hole 106. However, it is understood that there may be more splines spread around the periphery of annular base 114 in further embodiments. As examples, there can be 4, 5, 6, 7, 8, 9 or more splines 116.

In embodiments, the splines 116 may each have a spline width (SW, Fig. 5) of 1/16 inches, though the spline width of the splines 116 may be smaller or larger than that in further embodiments. In embodiments, the splines 116 may each have a spline length (SL, Fig. 5) beyond the outer diameter of the annular base 114 of 3/32 inches. With an outer diameter of the annular base at 1.063 inches, this provides an outer diameter of the end collar 112a (including splines 116) that fits snugly against the walls of hole 106 where hole 106 has an outer diameter of 1.25 inches. In this way, the end collar 112a maintains the rod 104 in a centered position in the hole 106. Where the hole 106 has a larger or smaller diameter, it is understood that the outer diameter of the annular base 114 and/or the spline length of splines 116 may be larger or smaller accordingly to maintain the splines snuggly against the walls of hole 106.

The splines 116 may have a lead-in edge 116a (Fig. 6) that is rounded or chamfered. This rounded/chamfered lead-in edge eases the insertion of the end collar 112a through the sealant 108 as the rod 104 is inserted to the base 106a of hole 106. It is understood that the rounded/chamfered lead-in edge 116a may be omitted in further embodiments. As seen for example in Fig. 5, portions of the splines 116 may extend over the end cap 120 and meet at a radial center of the end collar 112a. However, the splines 116 need not extend over the end cap 120 in further embodiments. As shown, where the splines 116 extend over the end cap 120, the splines may be wedge-shaped, again, to facilitate the insertion of the end collar 112a through the sealant 108 as the rod is inserted into hole 106. The splines 116 need not be wedge-shaped in further embodiments.

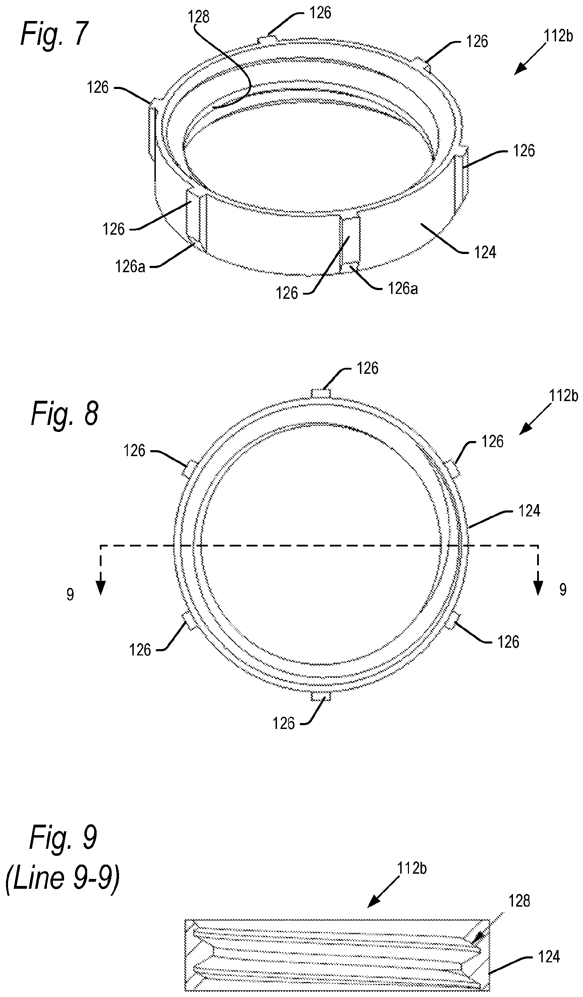

Given the length of rod 104, it may be desirable or necessary to include one or more collars 112 in addition to or instead of end collar 112a. Such additional collars, referred to herein as intermediate collars 112b, will now be explained with reference to Figs. 7-9. Fig. 7 is a perspective view of an intermediate collar 112b. Fig. 8 is a top view of an intermediate collar 112b. And Fig. 9 is a cross-sectional view of an intermediate collar 112b through line 9-9 in Fig. 8.

The one or more intermediate collars 112b may include an annular base 124 and splines 126 extending radially outward from the annular base 124. The annular base 124 may include an inner diameter having a size to fit snugly along the length of the rod 104. Where rod 104 is threaded, the inner diameter of the annular base 124 may have threads 128 to screw onto the rod 104. The interior diameter of the annular base 124 may have other features, such as tines, that allow the intermediate collar 112b to slide along the rod 104. In one embodiment, the annular base 124 may have a length (along its axis of rotation) of ½ inch, though the annular base 124 may be longer or shorter than this in further embodiments. The annular base 124 may have an outer diameter that is the same as the outer diameter of the annular base 114 of the end collar 112a.

The one or more intermediate collars 112b would be affixed to rod 104 prior to inserting the rod 104 into hole 106. In embodiments, an intermediate collar 112b is positioned along the rod 104, so that when the rod 104 is fully inserted into hole 106, the intermediate collar 112b is positioned at the mouth of the hole 106, as shown in Fig. 2. Where positioned on the rod so as to be at the mouth of hole 106, it is conceivable that an intermediate collar 112b may be inserted onto rod 104 after rod 104 is positioned in hole 106. It is understood that the intermediate collar(s) 112b may be positioned along the rod 104 to end up anywhere along the hole 106 when the rod 104 is inserted in the hole 106 instead of or in addition to an intermediate collar 112b at the mouth of the hole 106.

In order to keep the rod 104 centered in hole 106 while still allowing insertion of the rod and intermediate collar 112b, the intermediate collar 112b includes splines 126 positioned at points around the outer periphery of the intermediate collar 112b, extending radially outward from the annular base 124. Figs. 7-9 show six splines 126 evenly spread around the periphery of the annular base 114. However, it is understood that there may be more or less splines spread around the periphery of annular base 124 in further embodiments. As examples, there can be 2, 4, 5, 7, 8, 9 or more splines 126.

In embodiments, the splines 126 may each have a spline width and length which may be the same as the spline width and length of splines 116 of end collar 112a. As noted above, such dimensions provide a snug fit of intermediate collar(s) 112b against the walls of hole 106, and the intermediate collar(s) maintain the rod 104 centered within hole 106. Where the hole 106 has a larger or smaller diameter, it is understood that the outer diameter of the annular base 124 and/or the spline length of splines 126 may be larger or smaller accordingly to maintain the splines snuggly against the walls of hole 106.

The splines 126 may have a lead-in edge 126a (Fig. 7) that is rounded or chamfered. This rounded/chamfered lead-in edge eases the insertion of the intermediate collar 112b through the sealant 108 as the rod 104 is inserted into hole 106. It is understood that the rounded/chamfered lead-in edge 126a may be omitted in further embodiments.

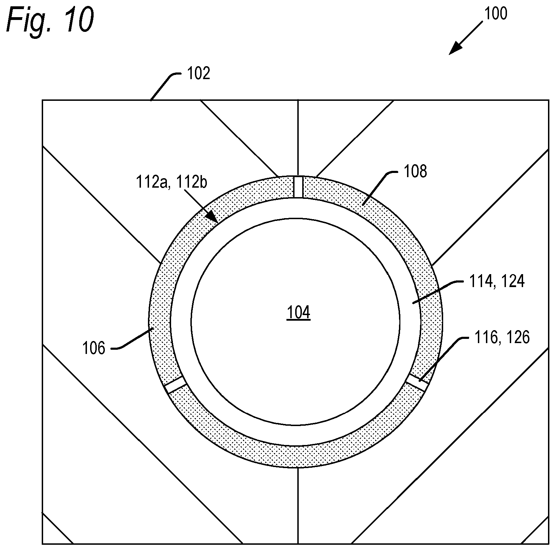

Fig. 10 is a cross-sectional view perpendicular to a central axis of hole 106 taken through a collar 112 (either an end collar 112a or an intermediate collar 112b). The end collar 112 includes an annular base 114, 124 mounted along the length or at the end of rod 104. The splines 116, 126 center the collar 112 and rod 104 within the hole 106, while allowing the sealant 108 to flow around the collar 112 as the collar 112 and rod 104 are inserted into the hole 106.

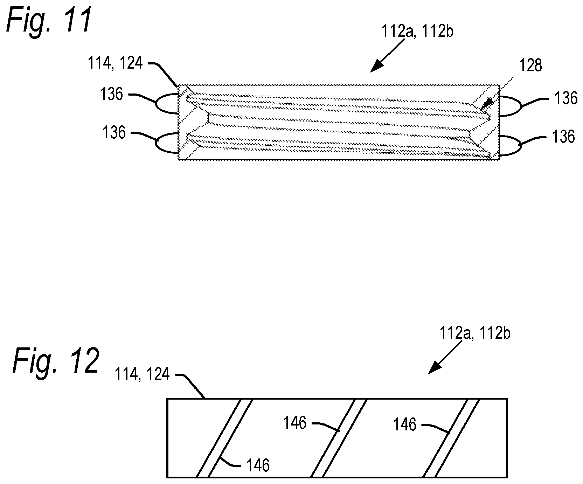

In the embodiments described above, the splines 116, 126 extend along an axial length of the collar 112a, 112b. In further embodiments which are out of the scope of the appended claims, instead of splines, other features may be provided that extend from the annular base 114, 124 and into contact with the walls of hole 106. For example, Fig. 11 is a view of collar 112a and/or 112b that includes dimples 136 instead of splines. There may be various number of dimples 136, in various configurations, around the outer periphery of the annular base 114, 124. Other features may be provided in further embodiments that center the collar 112 while allowing insertion of the collar 112 through the sealant 108.

The collars 112a and 112b may be formed of various hard polymers, but may alternatively be formed of other materials such as various metals or ceramics.

As noted, in most installations, the sealant 108 would be inserted into and lining hole 106 before the rod 104 and collar(s) 112 are inserted into the hole 106. However, it is conceivable that the rod 104 and collar(s) 112 be positioned in the hole 106 before the sealant 108 is inserted. In such instances, the sealant 108 would flow past the collars 112 as explained above.

In most installations where the rod 104 and collar(s) 112 are inserted after the sealant 108, the rod 104 is simply pushed down into the hole 106 through the sealant 108 without rotating the rod 106. The collars 112 described above (with the spines oriented along the axis of rotation) may be used for such installations. In further embodiments, the rod 104 is pushed down and rotate through the sealant 108. In such embodiments, collars 112a, 112b may be used that have the splines 146 wrapping helically around the annular base 114, 124. Such an embodiment is shown in Fig. 12. Alternatively, for such installations, the collars 112 described above (with the spines oriented along the axis of rotation) may be used. S

In summary, the present technology relates to a collar for a glued-in-rod structure configured to receive a rod in a hole, comprising: an annular base having an inner diameter and an outer diameter, the inner diameter configured to fit snugly around the rod; features extending radially outward from the outer diameter of the annular base, the features configured to contact walls of the hole while allowing passage of a fluid between the outer diameter of the collar and the walls of the hole.

In a further example, the present technology relates to a glued-in-rod structure, comprising: one of wood and a composite structure; a hole formed through the one of wood and composite structure; a rod inserted into the hole; and a collar configured to center the rod within the hole, the collar comprising: an annular base having an inner diameter and an outer diameter, the inner diameter configured to fit snugly around the rod; features extending radially outward from the outer diameter of the annular base, the features configured to contact walls of the hole while allowing passage of a fluid between the outer diameter of the collar and the walls of the hole.

The foregoing detailed description of the invention has been presented for purposes of illustration and description. It is not intended to be exhaustive or to limit the invention to the precise form disclosed. Many modifications and variations are possible in light of the above teaching. The described embodiments were chosen in order to best explain the principles of the invention and its practical application to thereby enable others skilled in the art to best utilize the invention in various embodiments and with various modifications as are suited to the particular use contemplated. It is intended that the scope of the invention be defined by the claims appended hereto.

## Claims

1. A collar (112) for a glued-in-rod structure (100) configured to receive a rod (104) in a hole (106), comprising:
an annular base (114) having an inner diameter and an outer diameter, the inner diameter configured to fit snugly around the rod (104);
features extending radially outward from the outer diameter of the annular base (114), the features configured to contact walls of the hole (106) while allowing passage of a fluid between the outer diameter of the collar and the walls of the hole,
wherein the collar (112) is an end collar (112a) configured to fit over an end of the rod,
wherein the end collar (112a) has an end cap (120) which is configured to limit the travel of the end collar (112a) onto the rod,
**characterized in that** the features extending radially outward from the annular base (114) are splines (116) and a portion of the splines (116) extends over the end cap (120) and meet at a radial center of the end collar (112a).

2. The collar (112) recited in claim 1, wherein the splines (116) are oriented axially along the outer diameter of collar (112).

3. The collar (112) recited in claim 2, wherein there are one of 3, 4, 5, 6, 7, 8 and 9 splines (116) spread evenly around the outer diameter of collar (112).

4. The collar (112) recited in claim 1, wherein the splines (116) are oriented helically along the outer diameter of collar (112).

5. A glued-in-rod structure (100), comprising:
one of wood and a composite structure;
a hole (106) formed through the one of wood and composite structure;
a rod (104) inserted into the hole (106); and
a collar (112) according to any one of claims 1 to 4 configured to center the rod (104) within the hole

6. A glued-in-rod structure (100) configured to receive a rod (104) in a hole (106), comprising:
a collar according to any one of claims 1 to 4 configured to center the rod (104) within the hole (106), the splines (116) being oriented along the outer diameter of the collar (112).

## Patentansprüche

1. Manschette (112) für eine Struktur (100) mit eingeklebter Stange, die dazu konfiguriert ist, eine Stange (104) in einem Loch (106) aufzunehmen, umfassend:
eine ringförmige Basis (114) mit einem Innendurchmesser und einem Außendurchmesser, wobei der Innendurchmesser dazu konfiguriert ist, eng um die Stange (104) anzuliegen;
Merkmale, die sich von dem Außendurchmesser der ringförmigen Basis (114) radial nach außen erstrecken, wobei die Merkmale dazu konfiguriert sind, Wände des Lochs (106) zu berühren, während ein Durchgang eines Fluids zwischen dem Außendurchmesser der Manschette und den Wänden des Lochs ermöglicht wird,
wobei die Manschette (112) eine Endmanschette (112a) ist, die dazu konfiguriert ist, über ein Ende der Stange zu passen,
wobei die Endmanschette (112a) eine Endkappe (120) aufweist, die dazu konfiguriert ist, die Bewegung der Endmanschette (112a) auf der Stange zu begrenzen,
**dadurch gekennzeichnet, dass** die Merkmale, die sich von der ringförmigen Basis (114) radial nach außen erstrecken, Verzahnungen (116) sind und sich ein Teil der Verzahnungen (116) über die Endkappe (120) erstreckt und sich an einer radialen Mitte der Endmanschette (112a) trifft.

2. Manschette (112) nach Anspruch 1, wobei die Verzahnungen (116) axial entlang des Außendurchmessers der Manschette (112) ausgerichtet sind.

3. Manschette (112) nach Anspruch 2, wobei es eine von 3, 4, 5, 6, 7, 8 und 9 Verzahnungen (116) gibt, die gleichmäßig um den Außendurchmesser der Manschette (112) verteilt sind.

4. Manschette (112) nach Anspruch 1, wobei die Verzahnungen (116) spiralförmig entlang des Außendurchmessers der Manschette (112) ausgerichtet sind.

5. Struktur (100) mit eingeklebter Stange, umfassend:
eines von Holz und einer Verbundstruktur;
ein Loch (106), das durch das eine von Holz und Verbundstruktur gebildet ist;
eine Stange (104), die in das Loch (106) eingesetzt ist; und
eine Manschette (112) nach einem der Ansprüche 1 bis 4, die dazu konfiguriert ist, die Stange (104) innerhalb des Lochs zu zentrieren.

6. Struktur (100) mit eingeklebter Stange, die dazu konfiguriert ist, eine Stange (104) in einem Loch (106) aufzunehmen, umfassend:
eine Manschette nach einem der Ansprüche 1 bis 4, die dazu konfiguriert ist, die Stange (104) innerhalb des Lochs (106) zu zentrieren, wobei die Verzahnungen (116) entlang des Außendurchmessers der Manschette (112) ausgerichtet sind.

## Revendications

1. Collier (112) pour une structure à tige collée (100) configurée pour recevoir une tige (104) dans un trou (106), comprenant :
une base annulaire (114) ayant un diamètre intérieur et un diamètre extérieur, le diamètre intérieur étant configuré pour s'ajuster étroitement autour de la tige (104) ;
des éléments s'étendant radialement vers l'extérieur depuis le diamètre extérieur de la base annulaire (114), les éléments étant configurés pour entrer en contact avec des parois du trou (106) tout en permettant le passage d'un fluide entre le diamètre extérieur du collier et les parois du trou,
dans lequel le collier (112) est un collier d'extrémité (112a) configuré pour s'adapter sur une extrémité de la tige,
dans lequel le collier d'extrémité (112a) comporte un capuchon d'extrémité (120) qui est configuré pour limiter la course du collier d'extrémité (112a) sur la tige,
**caractérisé en ce que** les éléments s'étendant radialement vers l'extérieur depuis la base annulaire (114) sont des nervures (116) et une partie des nervures (116) s'étend sur le capuchon d'extrémité (120) et se rejoint au niveau d'un centre radial du collier d'extrémité (112a).

2. Collier (112) selon la revendication 1, dans lequel les nervures (116) sont orientées axialement le long du diamètre extérieur du collier (112).

3. Collier (112) selon la revendication 2, dans lequel il y a un nombre de nervures (116) choisi parmi 3, 4, 5, 6, 7, 8 et 9, réparties uniformément autour du diamètre extérieur du collier (112).

4. Collier (112) selon la revendication 1, dans lequel les nervures (116) sont orientées de manière hélicoïdale le long du diamètre extérieur du collier (112).

5. Structure à tige collée (100), comprenant :
l'un d'un bois ou d'une structure composite ;
un trou (106) formé à travers le un d'un bois ou d'une structure composite ;
une tige (104) insérée dans le trou (106) ; et
un collier (112) selon l'une quelconque des revendications 1 à 4 configuré pour centrer la tige (104) à l'intérieur du trou (106).

6. Structure à tige collée (100) configurée pour recevoir une tige (104) dans un trou (106), comprenant :
un collier selon l'une quelconque des revendications 1 à 4 configuré pour centrer la tige (104) à l'intérieur du trou (106), les nervures (116) étant orientées le long du diamètre extérieur du collier (112).
